# EUROPÄISCHE PATENTANMELDUNG

(11) **EP 1 815 927 A2**
(43) Veröffentlichungstag der Anmeldung: **08.08.2007**
(21) Anmeldenummer: 07002380.9
(22) Anmeldetag: 03.02.2007
(51) Int. Cl.: B23B 31/14

(54) **Vorrichtung zum Spannen von Werkstücken in Verbindung mit einem Spannfutter oder einer allgemeinen Vorrichtung**

(30) Priorität: 06.02.2006 DE 202006001939 U
(71) Anmelder: Nagel Werkzeug- und Vorrichtungsbau GmbH, 73333 Gingen (DE)
(72) Erfinder: Kodalle Rudi, 72644 Oberboihingen (DE); Lang Martin, 73333 Gingen (DE)
(74) Vertreter: Fürst, Siegfried

(57) **Zusammenfassung**

Vorrichtung zum Spannen von Werkstücken in Verbindung mit einem Spannfutter (1) oder einer allgemeinen Spannvorrichtung, welche mindestens zwei zu dessen Rotationsachse (1a) radial bewegliche Spannteile - Grundbacken (10,20,30) -, zum Übertragen der Spannkräfte, sowie jeweils eine an letzteren angeordnete Aufsatzbacke (7a,7b,7c), zur Aufnahme und zum Spannen eines Werkstückes, besitzt, die zusammen jeweils eine Spannbacke bilden, wobei jede vorgesehene Grundbacke (10,20,30) eines Spannfutters (1) oder jede gleich wirkende radial bewegbare Komponente einer allgemeinen Spannvorrichtung eine über die Rotationsachse (1a) hinausreichende Körperverlängerung (17,27,37) besitzt, wobei diese Körperverlängerung (17,27,37) derart ist, dass beidseits der Rotationsachse (1a) bezüglich jeder Spannbacke ein Massenausgleich hinsichtlich der bei Rotation der Vorrichtung auftretenden Fliehkräfte gegeben ist.

## Beschreibung

Die Erfindung betrifft eine Vorrichtung zum Spannen von Werkstücken in Verbindung mit einem Spannfutter, vornehmlich mit einem Zwei-, Drei- bzw. Mehrbacken-Spannfutter, oder mit einer allgemeinen Spannvorrichtung an vorbestimmten äußeren (Spann-) Flächen seines Körpers.
Derartige Vorrichtungen werden für das positionierte Spannen eines Werkstückes bezüglich eines Werkzeuges einer Bearbeitungseinrichtung, z. B. eine Dreh-, Fräs- oder Bohrmaschine oder eines Bearbeitungs-Zentrums, verwendet.

Bekannt ist ein solches Spannen besagter Werkstücke mittels Dreibacken- oder Mehrbacken-Spannfutter bzw. mit speziellen, auf das zu bearbeitende Werkstück, d. h. auf dessen Geometrie zugeschnittene (Spezial-)Spannvorrichtungen. Diese speziellen Spannvorrichtungen werden entweder in, insbesondere zentrisch spannenden, Spannfuttern besagter Werkzeugmaschinen oder auf einem speziellen Maschinentisch einer Werkzeugmaschine lösbar befestigt.

Das Spannen von Werkstücken in Dreibacken- oder Mehrbacken-Spannfuttern ist bezüglich möglicher Deformationen der vorgegebenen Form des Werkstückes oder seiner Referenzfläche/-n sehr problematisch. Insbesondere, wenn in ein und derselben Aufspannung ein Schruppen und nachfolgend ein Schlichten der zu bearbeitenden Körperflächen erfolgt, hat sich in der Praxis gezeigt, dass das eingespannte Werkstück aus seiner Soll-Lage auswandern kann bzw. unerwünschte Deformationen auftreten können. Zudem sind derartige negative Erscheinungen auch dann aufgetreten, wenn während der Bearbeitung des Werkstückes große Drehzahlschwankungen erforderlich waren.
Problematisch wirken sich die vorgenannten Nachteile auch beim Spannen prismatischer oder rotationssymmetrischer Werkstücke, welche im Spannbereich bzw. im an den Spannbereich angrenzenden Körperbereich relativ dünnwandig ausgebildet sind, aus. Insbesondere wenn bei der Bearbeitung des Werkstückes im Schlicht-Arbeitsgang eine Präzisionsbearbeitung vorgesehen ist, haben die vorgenannten Nachteile große Auswirkungen auf die Maßhaltigkeit, insbesondere wenn die Fertigungs-Toleranzen im Hundertstel- oder Tausendstel-Bereich liegen.

Daher besteht die Aufgabe der Erfindung darin, eine Vorrichtung zum Spannen von Werkstücken in Verbindung mit einem Spannfutter, vornehmlich mit einem Zwei-, Drei- bzw. Mehrbacken-Spannfutter, oder mit einer allgemeinen Spannvorrichtung zu entwickeln, mit welcher die vorgenannten Nachteile wesentlich eliminiert werden können und die selbst mit geringen Herstellungskosten gefertigt werden kann.

Diese Aufgabe löst eine Vorrichtung zum Spannen von Werkstücken in Verbindung mit einem Spannfutter oder einer allgemeinen Vorrichtung mit den Merkmalen des Anspruches 1.
Die nachgeordneten Ansprüche 2 bis 8 offenbaren vorteilhafte Weiterbildungen der Erfindung und Ausführungsvarianten.

Nach dem Grundgedanken der Erfindung ist bei einer Vorrichtung zum Spannen von Werkstücken in Verbindung mit einem Spannfutter oder einer allgemeinen Spannvorrichtung, welche mindestens zwei zu dessen Rotationsachse radial bewegliche Spannteile - Grundbacken -, zum Übertragen der Spannkräfte, sowie jeweils eine an letzteren angeordnete Aufsatzbacke, zur Aufnahme und zum Spannen eines Werkstückes besitzt, vorgesehen, dass jede eingesetzte Grundbacke des Spannfutters oder jede gleich wirkende radial bewegbare Komponente einer allgemeinen Spannvorrichtung eine über die Rotationsachse hinausreichende Körperverlängerung besitzt, wobei diese Körperverlängerung derart ist, dass beidseits der Rotationsachse bezüglich jeder Spannbacke, die aus einer Grundbacke und einer auswechselbaren Aufsatzbacke besteht, ein Massenausgleich hinsichtlich der bei Rotation der Vorrichtung auftretenden Fliehkräfte gegeben ist.

Bevorzugt ist vorgesehen, dass die Grundbacke und ihre Körperverlängerung einstückig ist.

Nach einer weiteren Ausführung ist die Körperverlängerung zweiteilig. Dabei ist bevorzugt vorgesehen, dass das eine Teil der zweiteiligen Körpverlängerung ein an der Stirnfläche der Körperverlängerung angeordnetes Gegengewicht ist.
Eine andere Ausführung sieht vor, dass jedes Gegengewicht auswechselbar angeordnet und zumindest in radialer Richtung justierbar ist.

Zudem besitzt nach einer weiteren Ausführung jede Grundbacke wenigstens eine zentrale Ausnehmung, sodass im Mittenbereich jeder Grundbacke ein zentraler Steg gebildet ist, wobei im montierten Zustand der Steg einer Grundbacke an den Steg der benachbarten Grundbacke verschiebbar anliegt.

Die Vorteile dieser erfindungsgemäßen neuen Bauart für eine besagte Spann-Vorrichtung sind unter anderem ein sicheres Spannen des Werkstückes, auch wenn in ein und derselben Aufspannung das Werkstück geschruppt und geschlichtet wird bzw. während einer Aufspannung die Drehzahl des Werkstückes stark und insbesondere abrupt variiert wird. Zudem ist bei Einsatz der neuen Vorrichtung festgestellt worden, dass unabhängig von der momentanen Drehzahl des Werkstückes und auch bei Stillstand des Spannfutters Spannkraftveränderungen geringfügig sind.

Mit der neuen Vorrichtung, bereits in einer Ausführung nach dem Grundgedanken der Erfindung wird erreicht, dass die zum Einspannen eines Werkstückes applizierte Spannkraft über den gesamten Drehzahlbereich, den das Werkstück während dieser einen Aufspannung erfährt, nahezu konstant ist, d.h. der Betrag der applizierten Spannkraft ändert sich nur minimal; er liegt auf jeden Fall innerhalb eines Toleranzbereiches von +/- 10% der applizierten Spannkraft.
Zum einen bedeutet dies, dass aufgrund der neuen Bauart kein Spannkraftabfall bei steigender Drehzahl erfolgt. Zum anderen zeigt die besagte Vorrichtung keinen Effekt der Spannkraft-erhöhung (Hysterese) bei fallender Drehzahl.
Durch eine optimale, auf jedes Werkstück bzw. Werkstückserie ausgelegte Wahl der Körperverlängerung bezüglich seiner Masse und seiner Positionierung zur Drehachse des Werkstückes ist auch bei alternierender Drehzahl bzw. alternierender Drehrichtung der Vorrichtung eine konstante Spannkraft gegeben, insbesondere wenn dies in kurzen Zeitintervallen erfolgt. Unter konstant ist hierbei zu verstehen, dass sich die Spannkraft nur innerhalb des Bereiches der Messfehlertoleranz eines Messgerätes, mit welchem die Spannkraft messbar ist, minimal ändert.

Zum anderen wird durch die vorgenannte neue Ausgestaltung der Grundbacken eine geringe Bauhöhe erzielt.

Nach einer weiteren Ausführung weist jede Grundbacke ein zentral angeordnetes Durchgangsloch auf. Durch die - im montierten Zustand - zumindest teilweise übereinander liegenden zentralen Durchgangslöcher hindurch ist eine zumindest aus einem Flansch und einem Schaft bestehende Führungsbuchse eingesteckt, wobei zwischen dem Schaft und der Wandung der zentralen Durchgangslöcher ein Freiraum in der Größe vorgesehen ist, dass die radiale Bewegung der Grundbacken - die Spannbewegung - nicht behindert ist.
Diese Ausführung ist insbesondere dann von Vorteil, wenn die neue Vorrichtung auch für stangenähnlich ausgebildete Werkstücke bzw. für Werkstücke, die einen stabförmigen Ansatz auf der nicht zu bearbeitenden Werkstückseite aufweisen, verwendet werden soll. Die besagte Führungsbuchse kann einerseits zum Verschluss der Durchgangslöcher - Vermeidung von Schmutzablagerung - oder bei hohler Ausführung, eventuell unter Zwischenschaltung von Zwischenhülsen, zur schlagfreien Führung besagter stabförmiger Werkstückansätze eingesetzt werden.

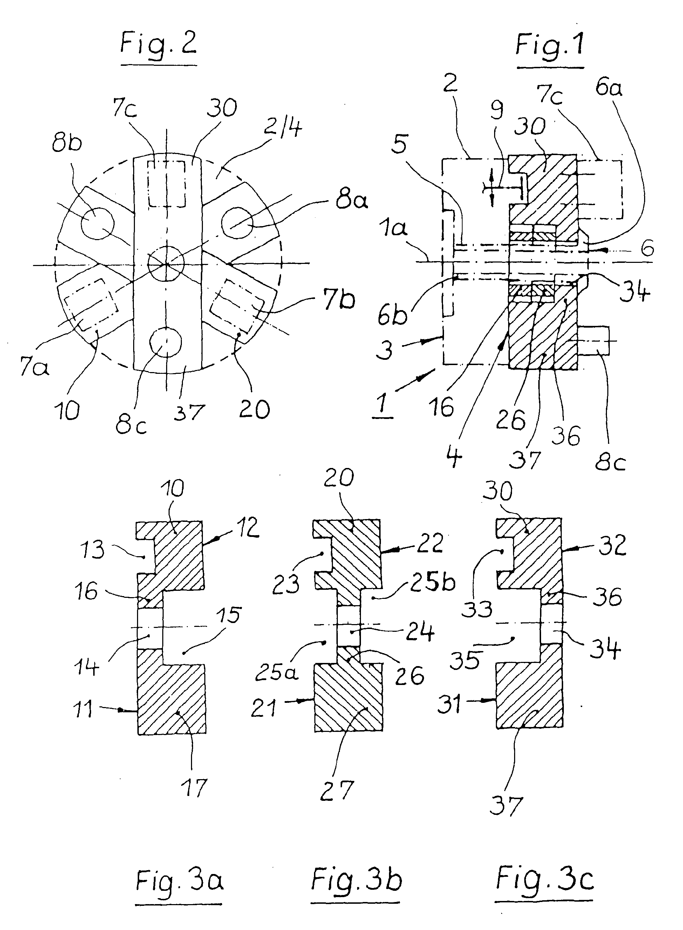

Die Erfindung wird nachstehend anhand eines möglichen Ausführungsbeispieles näher und im Weiteren erläutert. Zu dem Ausführungsbeispiel ist der Übersichtlichkeit halber in der Figur 1 nur eine Spannbacke / ein Spannteil der neuen Vorrichtung in Schnittdarstellung schematisch gezeigt.
Im Einzelnen zeigen:
- Figur 1: die neue Vorrichtung in Schnittdarstellung durch die Zentralebene der Darstellung in Figur 2;
- Figur 2: eine Frontalansicht auf die neue Vorrichtung und
- Figuren 3a - 3c: im Schnitt die bei der neuen Vorrichtung eingesetzten Grundbacken der Spannbacken.

In den Figuren 1 bis 3c ist die neue Vorrichtung in Ausführung eines Dreibackenfutters gezeigt. Der Grundkörper 2 dieses Spannfutters 1 ist in üblicher Art aufgebaut und daher nur durch eine Strich-Punkt-Linie angedeutet. Der Grundkörper 2 hat eine maschinenseitige Stirnfläche 3. Die Rotationsachse ist mit dem Bezugszeichen 1a markiert. In diesem Grundkörper 2 sind auch die Stellmittel 9 für die Bewegung der Grundbacken 10, 20 und 30 angeordnet. Diese Stellmittel 9 greifen jeweils in Ausnehmungen 13, 23 bzw. 33 der betreffenden Grundbacke 10, 20 und 30 ein, deren Aufbau im Detail in den Figuren 3a bis 3c gezeigt ist.

Jede dieser Grundbacken, die erste Grundbacke 10, die zweite Grundbacke 20 und die dritte Grundbacke 30 besitzen eine futterseitige Stirnfläche 11, 21 bzw. 31, die im Grundkörper 2 in dessen grundbackenseitige Stirnfläche 4 geführt ist, sowie eine aufsatzbackenseitige Stirnfläche 12, 22 bzw. 32.
In die futterseitige Stirnfläche 11, 21 bzw. 31 ist die betreffende Ausnehmung 13, 23 bzw. 33 eingearbeitet, in die das schon weiter vorn genannte Stellmittel 9 eingreift.

Jede der Grundbacken 10, 20 und 30 besitzt in neuer Gestaltung eine Körperverlängerung 17, 27 bzw. 37. Diese Körperverlängerungen 17, 27 und 37 sind jeweils über einen zentralen Steg 16, 26 bzw. 36 mit dem Grundteil der Grundbacke 10, 20 bzw. 30 verbunden.
Bei der ersten Grundbacke 10 ist im Bereich des Steges 16 eine von ihrer aufsatzbackenseitigen Stirnfläche 12 aus eingearbeitete zentrale Ausnehmung 15 vorgesehen. Bei der dritten Grundbacke 30 ist ebenfalls im Bereich von deren Steg 36, hier jedoch von deren futterseitigen Stirnfläche 31 aus, eine zentrale Ausnehmung 35 in den Körper eingearbeitet. Die zweite Grundbacke 20 besitzt beidseits eine Ausnehmung. Von der aufsatzbackenseitigen Stirnfläche 22 aus die zentrale rechte Ausnehmung 25b und von der futterseitigen Stirnfläche 21 aus die zentrale linke Ausnehmung 25a.

Durch diese neue Gestaltung liegen die Grundbacken 10, 20 und 30 im montierten Zustand teils ineinander, so dass eine geringe Bauhöhe, wie dies aus Figur 1 ersichtlich ist, erzielt wird.

Bei dem in den Figuren gezeigten Ausführungsbeispiel sind die Körperverlängerungen 17, 27 und 37 der Grundbacken 10, 20 und 30 zweiteilig ausgeführt. Das heißt, dass auf der betreffenden aufsatzbackenseitigen Stirnfläche 12, 22, 32 Gegengewichte 8a, 8b bzw. 8c angeordnet sind, siehe hierzu auch in Figur 2. Die Gegengewichte 8a, 8b und 8c sind radial verschieb- und justierbar auf den besagten Stirnflächen 12, 22 bzw. 32 montiert. Für jede aus einer Grundbacke 10, 20 bzw. 30 und einer Aufsatzbacke 7a, 7b bzw. 7c bestehende Spannbacke gilt, dass die Massen der Grundbacke nebst der mit ihr verbundenen Körperverlängerung, die in dem gezeigten Ausführungsbeispiel zusammen einstückig ausgebildet sind, der Aufsatzbacke und des Gegengewichtes bezüglich der Position "Werkstück gespannt" fliehkraftneutral angeordnet sind. Insbesondere bei nichtrotationssymmetrischen Werkstücken kann durch entsprechende Wahl der Gegengewichte Unwuchten des Werkstückes gleichsam ausgegleichen werden.

Zudem ist bei der gezeigten Ausführung im Speziellen vorgesehen, dass jede der Grundbacken 10, 20 und 30 ein zentrales Durchgangsloch 14, 24 bzw. 34 besitzen. Durch die - im montierten Zustand - zumindest teilweise übereinander liegenden zentralen Durchgangslöcher 14, 24 und 34 hindurch ist eine zumindest aus einem Flansch 6a und einem Schaft 6b bestehende Führungsbuchse 6 eingesteckt, wobei zwischen dem Schaft 6b und der Wandung der zentralen Durchgangslöcher 14, 24 und 34 ein Freiraum in der Größe vorgesehen ist, dass die radiale Bewegung der Grundbacken 10, 20 und 30 - deren Spannbewegung - nicht behindert ist.
Diese Ausführung ist insbesondere dann von Vorteil, wenn die neue Vorrichtung auch für stangenähnlich ausgebildete Werkstücke bzw. für Werkstücke, die einen stabförmigen Ansatz auf der nicht zu bearbeitenden Werkstückseite aufweisen, verwendet werden soll. Hierzu ist zudem vorgesehen, dass der Grundkörper 2 eine konzentrisch zur Rotationsachse 1a angeordnete durchgehende Ausnehmung 5 aufweist, die im Durchmesser so gehalten ist, dass der Schaft 6b der Führungsbuchse 6 hineingesteckt werden kann. Die besagte Führungsbuchse 6 kann einerseits zum Verschluss der Durchgangslöcher 14, 24 und 34 - Vermeidung von Schmutzablagerung - oder bei hohler Ausführung, eventuell unter Zwischenschaltung von Zwischenhülsen, zur schlagfreien Führung besagter stabförmiger Werkstückansätze eingesetzt werden.

Alle in der vorstehenden Beschreibung erwähnten sowie auch die allein aus den Zeichnungen entnehmbaren Merkmale sind weitere Bestandteile der Erfindung auch wenn sie nicht besonders hervorgehoben und in den Ansprüchen erwähnt sind. Die Erfindung ist nicht auf das Ausführungsbeispiel beschränkt, sondern im Rahmen der Offenbarung vielfach variabel.

### Bezugsziffernverzeichnis:

- 1: Spannfutter
- 1a: Rotationsachse
- 2: Grundkörper
- 3: maschinenseitige Stirnfläche
- 4: grundbackenseitige Stirnfläche
- 5: durchgehende zentrische Ausnehmung
- 6: Führungsbuchse
- 6a: Flansch
- 6b: Schaft
- 7a, 7b, 7c: Aufsatzbacken
- 8a, 8b, 8c: Gegengewichte
- 9: Stellmittel für Pos. 10, 20, 30
- 10: erste Grundbacke
11 futterseitige Stirnfläche
12 aufsatzbackenseitige Stirnfläche
13 Ausnehmung in Pos. 11
14 zentrales Durchgangsloch
15 zentrale Ausnehmung in Pos. 12
16 zentraler Steg
17 Körperverlängerung
- 20: zweite Grundbacke
21 futterseitige Stirnfläche
22 aufsatzbackenseitige Stirnfläche
23 Ausnehmung in Pos. 21
24 zentrales Durchgangsloch
25a zentrale linke Ausnehmung in Pos. 21
25b zentrale rechte Ausnehmung in Pos. 22
26 Steg
27 Körperverlängerung
- 30: dritte Grundbacke
31 futterseitige Stirnfläche
32 aufsatzbackenseitige Stirnfläche
33 Ausnehmung in Pos. 31
34 zentrales Durchgangsloch
35 zentrale Ausnehmung in Pos. 31
36 Steg
37 Körperverlängerung

## Patentansprüche

1. Vorrichtung zum Spannen von Werkstücken in Verbindung mit einem Spannfutter (1) oder einer allgemeinen Spannvorrichtung, welche mindestens zwei zu dessen Rotationsachse (1a) radial bewegliche Spannteile -Grundbacken (10, 20, 30) -, zum Übertragen der Spannkräfte, sowie jeweils eine an letzteren angeordnete Aufsatzbacke (7a, 7b und 7a), zur Aufnahme und zum Spannen eines Werkstückes, besitzt, die zusammen jeweils eine Spannbacke bilden,
**dadurch gekennzeichnet, dass**
jede vorgesehene Grundbacke (10, 20, 30) eines Spannfutters (1) oder jede gleich wirkende radial bewegbare Komponente einer allgemeinen Spannvorrichtung eine über die Rotationsachse (1a) hinausreichende Körperverlängerung (17, 27 bzw. 37) besitzt, wobei diese Körperverlängerung (17, 27, 37) derart ist, dass beidseits der Rotationsachse (1a) bezüglich jeder Spannbacke ein Massenausgleich hinsichtlich der bei Rotation der Vorrichtung auftretenden Fliehkräfte gegeben ist.

2. Vorrichtung nach Anspruch 1,
**dadurch gekennzeichnet, dass**
die Grundbacke (10, 20, 30) und ihre Körperverlängerung (17, 27, 37) einstückig ist.

3. Vorrichtung nach Anspruch 1 oder 2,
**dadurch gekennzeichnet, dass**
die Körperverlängerung (17, 27, 37) zweiteilig ist.

4. Vorrichtung nach Anspruch 3,
**dadurch gekennzeichnet, dass**
das eine Teil der zweiteiligen Körpverlängerung (17, 27, 37) ein an der Stirnfläche (12, 22, 32) der Körperverlängerung (17, 27, 37) angeordnetes Gegengewicht (8a, 8b, 8c) ist.

5. Vorrichtung nach Anspruch 4,
**dadurch gekennzeichnet, dass**
jedes Gegengewicht (8a, 8b, 8c) auswechselbar angeordnet und zumindest in radialer Richtung justierbar ist.

6. Vorrichtung nach Anspruch 1, 2, 3, 4 oder 5,
**dadurch gekennzeichnet, dass**
jede Grundbacke (10, 20, 30) wenigstens eine zentrale Ausnehmung (15, 25a, 25b, 35) besitzt, sodass im Mittenbereich jeder Grundbacke (10, 20, 30) ein zentraler Steg (16, 26, 36) gebildet ist, wobei im montierten Zustand der Steg (16 bzw. 36) einer Grundbacke an den Steg (26) der benachbarten Grundbacke verschiebbar anliegt.

7. Vorrichtung nach Anspruch 6,
**dadurch gekennzeichnet, dass**
jede Grundbacke (10, 20, 30) ein zentral angeordnetes Durchgangsloch (14, 24, 34) aufweist.

8. Vorrichtung nach Anspruch 7,
**dadurch gekennzeichnet, dass**
durch die im montierten Zustand zumindest teilweise übereinander liegenden zentralen Durchgangslöcher (14, 24 und 34) hindurch eine zumindest aus einem Flansch (6a) und einem Schaft (6b) bestehende Führungsbuchse (6) eingesteckt ist, wobei zwischen dem Schaft (6b) und der Wandung der zentralen Durchgangslöcher (14, 24, 34) ein Freiraum in der Größe vorgesehen ist, dass die radiale Bewegung der Grundbacken - Spannbewegung - nicht behindert ist.
